# EUROPÄISCHE PATENTANMELDUNG

(11) **EP 1 763 244 A2**
(43) Veröffentlichungstag der Anmeldung: **14.03.2007**
(21) Anmeldenummer: 06018724.2
(22) Anmeldetag: 07.09.2006
(51) Int. Cl.: H04N 7/173, H04N 5/445

(54) **Verfahren und ein System zur Durchführung von interaktivem Fernsehen**

(30) Priorität: 09.09.2005 DE 102005042979
(71) Anmelder: Deutsche Telekom AG, 53113 Bonn (DE)
(72) Erfinder: Hasemann, Jörg-Michael, 27321 Emtinghausen (DE)

(57) **Zusammenfassung**

Verfahren und System zur Durchführung von interaktivem Fernsehen, bei dem einem Fernsehteilnehmer zu einem auf dem Fernsehgerät laufenden interaktionsfähigen Fernsehprogramm von einem zentralen Dienstserver die Möglichkeit einer Reaktion über einen Rückkanal gegeben wird, wobei dass der Fernsehteilnehmer nach Maßgabe von durch den Dienstserver bereitgestellten Auswahloptionen mit einem von ihm gewählten Kommunikationsendgerät registriert wird, wonach durch den Dienstserver eine auf das ausgewählte Kommunikationsendgerät abgestimmte Interaktionsanwendung zur Kommunikation festgelegt wird, wobei der durch die Art des ausgewählten Kommunikationsendgeräts vorgegebene Kommunikationsweg als Rückkanal zum Dienstserver genutzt wird.

## Beschreibung

Die Erfindung betrifft ein Verfahren und ein System zur Durchführung von interaktivem Fernsehen, bei welchem einen Fernsehteilnehmer zu einem auf dem Fernsehgerät laufenden interaktionsfähigen Fernsehprogramm von einem zentralen Dienstserver die Möglichkeit einer Reaktion über einen Rückkanal gegeben wird.

Derartige interaktive Fernsehanwendungen ermöglichen es, dem Fernsehteilnehmer benutzerspezifisch und gegebenenfalls auf Anforderung Informationen bereitzustellen, auf welche der Fernsehteilnehmer reagieren kann. Somit wird eine bidirektionale Kommunikation zwischen dem das Medium Fernsehen nutzenden Dienstanbieter und hieran interessierten Fernsehteilnehmern ermöglicht. Beispielsweise kann mittels interaktiver Fernsehsitzung ein Fernsehteilnehmer an einer Quizsendung des Fernsehens teilnehmen oder Käufe im Fernsehen angebotener Waren- und Dienstleistungen abwickeln. Das interaktive Fernsehen benötigt somit einerseits einen Sendekanal zur Übertragung des Fernsehprogramms vom TV-Sender zum Fernsehgerät des Fernsehteilnehmers. Andererseits ist ein Rückkanal vom Fernsehteilnehmer zu dem das Fernsehprogramm veranlassenden Dienstanbieter erforderlich, um die Interaktionen des Fernsehteilnehmers zu den vorstehend als Beispiele angegebenen Zwecken zu verarbeiten.

Aus dem allgemeinen Stand der Technik ist bekannt, interaktives Fernsehen in Form von Zuschauerabstimmungen bei Unterhaltungssendungen oder politischen Sendungen durchzuführen. Hierbei reagiert der Fernsehteilnehmer per SMS oder per Sprachanruf an eine über das Fernsehprogramm veröffentlichten Rufnummer, welche gewöhnlich mit verschiedenen Suffixen wählbar ist, um die möglichen Abstimmungsoptionen zu realisieren. Es wird also über das Fernsehprogramm die Art des vom Fernsehteilnehmer zu nutzenden Kommunikationsendgeräts - z.B. Festnetztelefon bzw. Mobilfunkendgerät - festgelegt.

Die DE 195 16 577 C2 offenbart ein gattungsgemäßes Verfahren sowie System zur Durchführung von interaktivem Fernsehen, welches sich eines beim Fernsehteilnehmer aufgestellten Fernsehgeräts und einem damit verbundenen Personalcomputers (PC) mit eigenem Monitor sowie einen vom Dienstanbieter individuell implementierten Dienstserver bedient, wobei der PC und der Dienstserver über ein Telekommunikationsnetz zur Bildung des Rückkanals miteinander verbunden sind.

Mit diesem bekannten System wird zunächst ein bestimmtes interaktionsfähiges Fernsehprogramm durch den Fernsehteilnehmer zur Wiedergabe über das Fernsehgerät ausgewählt. Hierbei werden Steuerdaten empfangen, die in den das interaktive Fernsehprogramm darstellenden Videosignalen enthalten sind, wobei diese Steuerdaten eine Rufnummer, welche dem Dienstserver des ausgewählten Dienstanbieters zugeordnet ist, enthalten. Mit diesen Informationen erfolgt durch den PC ein automatisches Anwählen des Rückkanals zum Dienstserver des ausgewählten Dienstanbieters unter Ansprechen auf die Rufnummer. Nach Verbindungsaufbau wird eine graphische Benutzeroberfläche auf dem Monitor des clientseitigen PC's durch den Dienstserver erzeugt und gesteuert.

Es ist auch bei diesem Stand der Technik von Nachteil, dass über das System der gerätetechnische Aufbau des Rückkanals fest vorgegeben ist. Denn der Fernsehteilnehmer ist daran gebunden, seine Interaktion über den heimischen PC zu vollziehen, um am interaktiven Fernsehen teilzunehmen. Da in der häuslichen Umgebung ein PC oftmals nicht in bequemer Reichweite zum Fernsehgerät ist, erweist sich dieses bekannte System als recht umständlich in der Handhabung. Zu dem setzt die Teilnahme am interaktiven Fernsehen voraus, dass der Fernsehteilnehmer einen PC besitz, welcher an einem Telekommunikationsnetz angeschlossen ist. Somit ist dieses System nur derjenigen Teilmenge von Fernsehteilnehmern zugänglich, welche über die entsprechende Kommunikationstechnik für den systemtechnisch vorgegebenen Rückkanal verfügen.

Es ist daher die Aufgabe der vorliegenden Erfindung ein verfahren sowie ein System zum interaktiven Fernsehen zu schaffen, das flexibel für verschiedenartige Rückkanale offen ist.

Die Aufgabe wird verfahrenstechnisch ausgehend vom Oberbegriff des Anspruchs 1 in Verbindung mit dessen kennzeichnenden Merkmalen gelöst. Systemtechnisch wird die Aufgabe durch Anspruch 8 gelöst. Die jeweils rückbezogenen Ansprüche geben vorteilhafte Weiterbildungen der Erfindung wieder.

Die Erfindung schließt die technische Lehre ein, dass der Fernsehteilnehmer nach Maßgabe von durch den Dienstserver des interaktiven Fernsehens bereitgestellten Auswahloptionen mit einem von ihm gewählten Kommunikationsendgerät registrierbar ist, und der zentrale Dienstserver eine auf das ausgewählte Kommunikationsendgerät abgestimmte Interaktionsanwendung zur Kommunikation festlegt, so dass der durch die Art des ausgewählten Kommunikationsendgeräts von Fernsehteilnehmer vorgegebene Kommunikationsweg als Rückkanal zum Dienstserver nutzbar ist.

Der Vorteil der erfindungsgemäßen Lösung liegt insbesondere darin, dass die große Anzahl von im Markt befindlichen Kommunikationsendgeräten, wie WAP-Mobilfunktelefone, JAVA-Mobilfunkendgeräte und dergleichen für interaktives Fernsehen nutzbar ist. Daneben sind auch MHP-fähige Set-Top-Module als Kommunikationsendgerät im Sinne der vorliegenden Erfindung geeignet. Eine allgemein im Stand der Technik bekannte MHP-Anwendung dient dabei der Erzeugung der Interaktionslogik mit dem Fernsehteilnehmer. Das Set-Top-Modul ist in diesem Falle über eine Fernbedienung, welche auch als Fernbedienung für das Fernsehgerät nutzbar sein kann, ansteuerbar. Wird der Rückkanal zum Dienstserver über ein Set-Top-Modul bereitgestellt, so kann dieses als Zusatzgerät zum Fernsehgerät ausgebildet sein oder auch direkt im Fernsehgerät integriert sein.

Die erfindungsgemäße Lösung trägt somit zu einer Steigerung der Reichweite und Akzeptanz von multimedialen und interaktiven Fernsehanwendungen bei. Der Fernsehteilnehmer kann das jenige Kommunikationsendgerät für seine Interaktionen beim interaktiven Fernsehen nutzen, welches er persönlich bevorzugt. Die Auswahl ist allerdings auf die vom Dienstserver bereitgestellten Auswahloptionen begrenzt. Denn der Dienstserver hat die zum Kommunikationsendgerät passende Interaktionsanwendung vorzugeben. Bezüglich Kommunikationsendgeräte zu erwartende Nutzungsbarrieren vom Fernsehteilnehmer können durch die erfindungsgemäße Lösung also minimiert werden. Darüber hinaus ermöglicht die erfindungsgemäße Lösung einen erleichterten Zugang zum interaktiven Fernsehen im Vergleich zu den bekannten Systemen, welche das für den Rückkanal zu verwendende Kommunikationsendgerät fest vorgeben, beispielsweise PC oder Telefon.

In der Regel ist die Auswahl des Kommunikationsendgerätes am Dienstserver im Rahmen der Registrierung des Fernsehteilnehmers zum interaktiven Fernsehen einmalig durchzuführen, wobei der Fernsehteilnehmer natürlich nachfolgend auch eine Änderung des ausgewählten Kommunikationsendgeräts und damit des Kommunikationswegs für den Rückkanal vollziehen kann. Zu diesem Zwecke hat sich der Fernsehteilnehmer zum wiederholten Male in den Dienstserver einzuwählen und die Auswahloptionen entsprechend zu ändern.

Die Verbindung zwischen dem Fernsehteilnehmer und dem Dienstserver wird vorzugsweise via Internet durchgeführt. Darüber hinaus ist es auch denkbar die Registrationslogik per JAVA, MHP oder WAP-Endgeräte durchzuführen. Als Ergebnis der Registrierung liegt ein Datenbankeintrag beim Dienstserver vor, welcher dem Fernsehteilnehmer einen eindeutigen Identifikationscode zuweist, sowie ihn anhand von Identifikationsmerkmalen - beispielsweise MSISDN oder IP-Adresse - für den Dienstserver erkennbar macht. Mit der Registrierung hat der Fernsehteilnehmer damit seine Identifikationsmerkmale, die Zugangsart und in Abhängigkeit davon auch die Displayeigenschaften seines Kommunikationsendgerätes festgelegt. Entsprechend der Displayeigenschaften werden insbesondere bildliche Inhalte entsprechend angepasst, also gemäß Pixelanzahl und dergleichen. Hierzu bietet sich die Nutzung entsprechenden Frameworks an.

Vorzugsweise wird durch die serverseitige Interaktionsanwendung eine für das ausgewählte clientseitige Kommunikationsendgerät geeignete Benutzeroberfläche bereitgestellt. Die Tnteraktionsanwendung wird beispielsweise im Falle von WAP serverseitig. Im Fall MHP, JAVA-Endgeräten ist die Interaktionsanwendung - ggf. nach herunterladen vom Dienstserver - auf dem jeweiligen Kommunikationsendgerät gestartet. Die auf das ausgewählte clientseitige Kommunikationsendgerät vorgesehene Interaktionsanwendung definiert neben den Displayeigenschaften auch die Tastatureingabeoptionen des Kommunikationsendgeräts. Dient beispielsweise die Fernbedienung eines Set-Top-Moduls als Kommunikationsendgerät, so wird über die Interaktionsanwendung festgelegt, mit welchen Tasten der Fernbedienung bestimmte Auswahloptionen im Rahmen des interaktiven Fernsehens ausgelöst werden. Neben herkömmlichen Tastaturen können auch andere Eingabemittel, wie berührungssensitiven Displays und dergleichen genutzt werden.

Der Rückkanal zum Dienstserver ist erfindungsgemäß abhängig vom Kommunikationsendgerät, wird ein Set-Top-Modul als Kommunikationsendgerät für digitales interaktives Fernsehen genutzt, so wird dessen an ein Telekommunikationsnetz (beispielsweise ISDN) anschließbarer Kommunikationskanal als Rückkanal zum Dienstserver genutzt. Wird als Kommunikationsendgerät dagegen ein Mobilfunkendgerät ausgewählt, so ist als Rückkanal zum Dienstserver das Mobilfunknetz nutzbar. In diesem Falle ist der Dienstserver mit einer Mobilfunknetz-Schnittstelle auszustatten.

Weitere die Erfindung verbessernde Maßnahmen werden nachstehend gemeinsam mit der Beschreibung bevorzugter Ausführungsbeispiele anhand der Figuren näher dargestellt. Es zeigt;
- Figur 1: ein schematisches Blockschaltbild eines Systems zur Durchführung von interaktivem Fernsehen mit einer Set-Top-Box als ausgewähltes Kommunikationsendgerät, und
- Figur 2: ein schematisches Blockschaltbild eines Systems zur Durchführung von interaktivem Fernsehen mit einem Mobilfunkendgerät als ausgewähltes Kommunikationsendgerät.

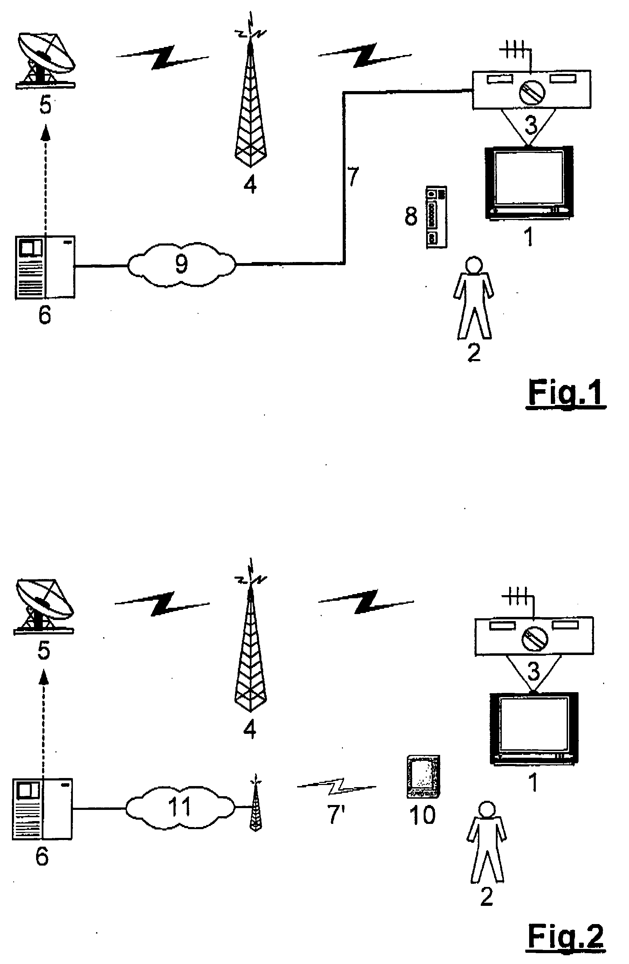

Gemäß Figur 1 ist an das Fernsehgerät 1 eines Fernsehteilnehmers 2 ein hier als separates Zusatzgerät ausgebildetes Set-Top-Modul 3 angeschlossen. Das Set-Top-Modul 3 bildet in diesem Ausführungsbeispiel ein Empfangsteil für digitales Fernsehen, das MHP-fähig ist, worüber die interaktionslogik im Rahmen von interaktivem Fernsehen umgesetzt wird.

Das Fernsehsignal nach dem DVB-T-Standard empfängt die Set-Top-Box 3 ausgehend von einem digitalen Fernsehsender 4. Das über den digitalen Fernsehsender 4 ausgestrahlte interaktive Fernsehprogramm inklusive MHP-Daten werden von einer Fernsehstation 5 erzeugt. Die dem digitalen Fernsehsignal beigefügten MHP-Daten-erhält die Fernsehstation 5 von einem hiermit in Verbindung stehenden Dienstserver 6 für interaktives Fernsehen. Der Fernsehteilnehmer 2 hat zu dem auf dem Fernsehgerät 1 laufenden interaktionsfähigen Fernsehprogramm mittels des zentralen Dienstservers 6 die Möglichkeit einer Reaktion über einen Rückkanal 7, der in diesem Ausführungsbeispiel von der Set-Top-Box 3 ausgehend über das Internet zum Dienstserver 6 führt. Die Interaktionen des Fernsehteilnehmers 2 erfolgen mittels Fernbedienung 8 des Set-Top-Moduls 3, wobei die durch die MHP-Anwendung zur Verfügung gestellte Interaktionslogik genutzt wird.

Der Fernsehteilnehmer 2 ist auf dem Dienstserver 6 bei diesem Ausführungsbeispiel mit der Set-Top-Box 3 als Kommunikationsendgerät registriert, so dass der durch die Art dieses Kommunikationsendgeräts vorgegebene Rückkanal 7 als Kommunikationsweg zum Dienstserver 6 zum Zwecke der Weiterleitung der Interaktion des Fernsehteilnehmers 2 über dessen Fernbedienung 8 genutzt wird.

Gemäß Figur 2 ermöglicht das erfindungsgemäße System auch die Benutzung eines Mobilfunkendgerätes 10 als Kommunikationsendgerät des Fernsehteilnehmers 2 für das interaktive Fernsehen. Das Fernsehsignal selbst wird auch hier ausgehend von der Fernsehstation 5 über einen Fernsehsender 4 per digitales Fernsehen unter Zwischenschaltung eines Set-Top-Moduls 3 zum Fernsehgerät 1 des Fernsehteilnehmers 2 gesendet. Allerdings benötigt das Set-Top-Modul 3 bei diesem Ausführungsbeispiel nicht einen Kommunikationsanschluss für einen Rückkanal.

Der Fernsehteilnehmer 2 ist beim Dienstserver 6 als Nutzer seines Mobilfunkendgerätes 10 als Kommunikationsendgerät für das interaktive Fernsehen registriert. Der Rückkanal 7' läuft bei diesem Ausführungsbeispiel über das Mobilfunknetz 11. Auch der Dienstserver 6 verfügt über eine Mobilfunkschnittstelle, worüber dieser am Mobilfunknetz 11 angeschlossen ist.

Die erfindungsgemäße Lösung ermöglicht es dem Fernsehteilnehmer 2 sich nach Maßgabe von durch den Dienstserver 6 bereitgestellten Auswahloptionen mit einem von ihm bevorzugten Kommunikationsendgerät - entweder einer Fernbedienung 8 oder einem Mobilfunkendgerät 10 oder dergleichen - registrieren zu lassen, wonach durch den Dienstserver 6 eine auf das ausgewählte Kommunikationsendgerät abgestimmte interaktionsanwendung zur Kommunikation im Rahmen des interaktiven Fernsehens festgelegt wird. Hierbei bildet der durch die Art des ausgewählten Kommunikationsendgeräts vorgegebene Kommunikationsweg den Rückkanal 7 bzw. 7' zum Dienstserver 6.

Die Erfindung ist nicht beschränkt auf die beiden vorstehend beschriebenen Ausführungsbeispiele. Es sind vielmehr auch Abwandlungen hiervon denkbar, welche vom Schutzumfang der nachfolgenden Ansprüche umfasst sind. So ist die Wahl des Kommunikationsendgeräts nicht allein auf die Fernbedienung eines Set-Top-Moduls oder eines Mobilfunkendgeräts beschränkt. So ist es auch denkbar, dass der Dienstserver 6 auch einen PC oder ein Festnetztelefon als Auswahloption für das Kommunikationsendgerät bereitstellt. Die Interaktionsanwendung für das interaktive Fernsehen kann sowohl server - als auch clientseitig angeordnet sein.

### Bezugszeichenliste:

- 1: Fernsehgerät
- 2: Fernsehteilnehmer
- 3: Set-Top-Modul
- 4: Fernsehsender
- 5: Fernsehstation
- 6: Dienstserver
- 7: Rückkanal
- 8: Fernbedienung
- 9: Telekommunikationsnetz
- 10: Mobilfunkendgerät
- 11: Mobilfunknetz

## Patentansprüche

1. Verfahren zur Durchführung von interaktivem Fernsehen, bei dem einem Fernsehteilnehmer (2) zu einem auf dem Fernsehgerät (1) laufenden interaktionsfähigen Fernsehprogramm von einem zentralen Dienstserver (6) die Möglichkeit einer Reaktion über einen Rückkanal (7; 7') gegeben wird,
**dadurch gekennzeichnet, dass** der Fernsehteilnehmer (2) nach Maßgabe von durch den Dienstserver (6) bereitgestellten Auswahloptionen mit einem von ihm gewählten Kommunikationsendgerät registriert wird, wonach durch den Dienstserver (6) eine auf das ausgewählte Kommunikationsendgerät abgestimmte Interaktionsanwendung zur Kommunikation festgelegt wird, wobei der durch die Art des ausgewählten Kommunikationsendgeräts vom Fernsehteilnehmer (2) vorgegebene Kommunikationsweg als Rückkanal (7; 7') zum Dienstserver (6) genutzt wird.

2. Verfahren nach Anspruch 1,
**dadurch gekennzeichnet, dass** die Auswahl des Kommunikationsendgerätes am Dienstserver (6) im Rahmen der Registrierung des Fernsehteilnehmers (2) zum interaktiven Fernsehen einmalig durchgeführt wird, wobei dem Fernsehteilnehmer (2) nachfolgend eine Änderung des ausgewählten Kommunikationsendgeräts und damit des Kommunikationswegs für den Rückkanal (7; 7') ermöglicht wird.

3. Verfahren nach Anspruch 1,
**dadurch gekennzeichnet, dass** durch die serverseitige Interaktionsanwendung eine für das ausgewählte clientseitige Kommunikationsendgerät geeignete Benutzeroberfläche bereitgestellt wird.

4. Verfahren nach Anspruch 1,
**dadurch gekennzeichnet, dass** die serverseitige Interaktionsanwendung für das ausgewählte clientseitige Kommunikationsendgerät geeignete Tastatureingabeoptionen definiert.

5. Verfahren nach Anspruch 1,
**dadurch gekennzeichnet,**
**dass** als Rückkanal (7) zum Dienstserver (6) der Kommunikationskanal eines mit dem Fernsehgerät (1) verbundenen Set-Top-Moduls (3) für digitales interaktives Fernsehen genutzt wird, wozu das Set-Top-Modul (3) an ein Telekommunikationsnetz (9) angeschlossen wird (Fig. 1).

6. Verfahren nach Anspruch 5,
**dadurch gekennzeichnet, dass** die Interaktion des Fernsehteilnehmers (2) über die Fernbedienung (8) des Set-Top-Moduls (3) oder des Fernsehgeräts (1) durchgeführt wird, wobei die Interaktionslogik des Set-Top-Moduls (3) genutzt wird.

7. Verfahren nach Anspruch 1,
**dadurch gekennzeichnet, dass** als Rückkanal (7') zum Dienstserver (6) ein Mobilfunknetz (11) genutzt wird, so dass der Fernsehteilnehmer (2) über ein Mobilfunkendgerät (10) mit dem Dienstserver (6) kommuniziert (Fig. 2).

8. System zur Durchführung von interaktivem Fernsehen, das einem Fernsehteilnehmer (2) zu einem auf dem Fernsehgerät (1) laufenden interaktionsfähigen Fernsehprogramm mittels zentralem Dienstserver (6) die Möglichkeit einer Reaktion über einen Rückkanal (7; 7') gibt,
**dadurch gekennzeichnet, dass** der Fernsehteilnehmer (2) nach Maßgabe von durch den Dienstserver (6) bereitgestellten Auswahloptionen mit einem von ihm gewählten Kommunikationsendgerät registrierbar ist, und der Dienstserver (6) eine auf das ausgewählte Kommunikationsendgerät abgestimmte Interaktionsanwendung zur Kommunikation festgelegt, so dass der durch die Art des ausgewählten Kommunikationsendgeräts vom Fernsehteilnehmer (2) vorgegebene Kommunikationsweg als Rückkanal (7; 7') zum Dienstserver (6) nutzbar ist.

9. System nach Anspruch 8,
**dadurch gekennzeichnet, dass** ein Kommunikationsendgerät zur Anwendung kommt, das ausgewählt ist aus einer Klasse, umfassend: WAP-Mobilfunkendgerät, JAVA-Mobilfunkendgerät (10), Fernbedienung (8) des Set-Top-Moduls (3) oder des Fernsehgeräts (1).

10. System nach Anspruch 8,
**dadurch gekennzeichnet, dass** ein der Rückkanal (7) zum Dienstserver (6) bereitstellendes Set-Top-Modul (3) in Form eines Zusatzgerätes zum Fernsehgerät (1) ausgebildet ist oder direkt in das Fernsehgerät (1) integriert ist.

11. System nach Anspruch 10,
**dadurch gekennzeichnet, dass** das Set-Top-Modul (3) eine MHP-Anwendung zur Erzeugung der Interaktionslogik mit dem Fernsehteilnehmer (2) bereitstellt.
